# EUROPÄISCHE PATENTSCHRIFT

(11) **EP 3 280 019 B1**
(45) Veröffentlichungstag und Bekanntmachung des Hinweises auf die Patenterteilung: **07.09.2022**
(21) Anmeldenummer: 17184000.2
(22) Anmeldetag: 31.07.2017
(51) Int. Cl.: H02G 3/04, H02G 3/08

(54) **INSTALLATIONSDOSE FÜR DIE ELEKTROINSTALLATION**
INSTALLATION BOX FOR ELECTRICAL INSTALLATION
BOITIER D'INSTALLATION POUR INSTALLATION ELECTRIQUE

(30) Priorität: 02.08.2016 DE 202016104239 U
(43) Veröffentlichungstag der Anmeldung: 07.02.2018
(73) Patentinhaber: f-tronic GmbH, 66131 Saarbrücken (DE)
(72) Erfinder: Fohs, Peter, 66399 Mandelbachtal (DE)
(74) Vertreter: Keil & Schaafhausen Patentanwälte PartGmbB

(56) Entgegenhaltungen:
- EP-A1- 2 472 685
- DE-A1-102010 007 046
- DE-B3-102014 108 551
- DE-U1-202005 004 028
- DE-U1-202006 003 356
- DE-U1-202014 104 064
- FR-A1- 3 005 214
- GB-A- 2 531 598

## Beschreibung

Die vorliegende Erfindung betrifft eine Installationsdose für die Elektroinstallation nach dem Oberbegriff des Anspruchs 1.

Derartige Installationsdosen sind bekannt und werden insbesondere in der sogenannten Hohlwandinstallation verwendet. Dabei geht es darum, dass Wände in Ständerbauweise errichtet werden, wobei die Wandflächen gebildet werden, indem diese in Ständerbauweise errichteten Tragstrukturen beplankt werden. Diese Beplankung erfolgt üblicherweise mit Gipskartonplatten.

Es ist weiterhin bekannt, in diese Beplankungen Öffnungen einzubringen, in die Installationsdosen von der Sichtseite der Beplankung eingeführt werden. Die Installationsdosen werden befestigt, indem diese sogenannte Spannbratzen aufweisen. Dabei handelt es sich um Riegelelemente, die mittels einer Spannschraube angezogen werden. Die Spannschrauben sind durch Öffnungen im Randbereich der Installationsdose geführt. Die Spannbratzen sind zum Einsetzen der Installationsdosen so an die Außenseite der Installationsdose angelegt, dass diese nicht seitlich über den Umfang der Installationsdose hinausstehen. Werden nach dem Einsetzen der Installationsdose die Spannschrauben angezogen, werden dadurch die Spannbratzen so gedreht, dass diese über den Umfang der Installationsdose herausstehen. Durch das Anziehen der Spannschrauben werden die Spannbratzen auf die Rückseite der Beplankung gezogen und hintergreifen somit diese Beplankung. Die Installationsdose weist weiterhin einen Kragen auf, der auf der Sichtseite der Beplankung im Randbereich der Öffnung der Beplankung aufliegt. Durch das Zusammenwirken der über die Spannschrauben angezogenen Spannbratzen mit dem aufliegenden Kragen wird die Installationsdose befestigt.

Bei diesen Wänden in Ständerbauweise ergibt sich ein Problem bei der Brandschutzklassifizierung. Üblicherweise werden die Beplankungen als Doppelbeplankung zweier übereinander angeordneter Gipskartonplatten ausgeführt. Diese Wände haben dann eine Feuerfestigkeitsklasse F90. Problematisch ist dabei, dass die Öffnungen, die in die Beplankung eingebracht werden, diese Feuerfestigkeitsklasse nicht haben. Insbesondere können sich in der Hohlwand Brände ausbreiten, wobei die Flammen aus den Öffnungen der Beplankung heraustreten können.

Dies erweist sich als besonders problematisch bei der Montage von Lichtschaltern. Diese werden in genormten Höhen mit einem genormten seitlichen Abstand zu einem Türrahmen montiert. Wird eine solche Wand in Ständerbauweise zur Trennung von zwei Räumen errichtet derart, dass in diese Wand eine Türöffnung eingebracht wird, ergibt sich, dass die Sollpositionen für die Lichtschalter in der Wand neben der Türöffnung genau "Rücken an Rücken" angeordnet sind.

Dies ermöglicht ein Übergreifen eines Feuers in einem der Räume auf den anderen Raum. Die Flammen können durch die eine Öffnung für den Lichtschalter in der Beplankung aus dem Raum, in dem das Feuer entstanden ist, in die Hohlwand hineintreten. Diese Flammen können besonders leicht direkt durch die Öffnung in der gegenüberliegenden Beplankung für den Lichtschalter in dem benachbarten Raum wieder aus der Hohlwand heraus in den benachbarten Raum eindringen. Dadurch wird eine Ausbreitung eines Feuers begünstigt.

Zur Lösung dieses Problems ist es bekannt, eine Hohlwanddose so auszubilden, dass diese entweder vollständig aus intumeszierendem Material besteht oder eine Beschichtung aus einem solchen intumeszierenden Material aufweist.

Es ist ebenso bekannt, Pads aus intumeszierendem Material vorzusehen und diese in eine herkömmliche Hohlwanddose einzulegen.

Das bekannte intumeszierende Material besteht aus einem Blähgraphit. Dieser Blähgraphit hat die Eigenschaft, sich bei Hitze auszudehnen. Diese Ausdehnung erfolgt mit solchen Kräften, dass dabei die Struktur einer herkömmlichen Hohlwanddose zerstört wird. Der Blähgraphit dehnt sich bei der Anwendung im Zusammenhang mit der Elektroninstallationsdose so aus, dass die Öffnung der Elektroinstallationsdose durch das intumeszierende Material verschlossen wird.

Durch dieses Verschließen der Öffnung durch das intumeszierende Material kann vorteilhaft der eingangs beschriebene Austritt von Flammen aus den Öffnungen in der Beplankung verhindert werden. Das intumeszierende Material hat sich durch die Hitzeentwicklung bereits ausreichend ausgedehnt, wenn die Flammen in die Nähe der Öffnung in der Beplankung kommen.

Es werden auch Brandschutzdosen mit dem intumeszierenden Material vorgesehen bei der Unterputz-Montage insbesondere bei dünnen Wänden, die beispielsweise eine Wandstärke von 100 mm aufweisen. Auch bei diesen dünnen Wänden kann es sich ergeben, dass beispielsweise Lichtschalter in benachbarten Räumen derart installiert werden, dass deren Installationsdosen "Rücken an Rücken" in einer Bohrung in der Wand angeordnet sind. Die Installationsdosen selbst werden mit den bekannten Spreizkrallen über die Installationsdose in der Wand befestigt oder mit den Montageschrauben in der Installationsdose befestigt. Durch diese Montage "Rücken an Rücken" bei dünnen Wänden kann es ebenfalls dazu kommen, dass sich ein Brand aus einem Raum durch die Installationsdosen in den Nachbarraum ausbreitet. Die Installationsdosen als Brandschutzdosen mit intumeszierendem Material sind daher nicht auf die Hohlwandinstallation beschränkt, sondern können auch bei Unterputzinstallationen zur Anwendung kommen.

Aus der GB 2 531 598 A ist eine Installationsdose bekannt, die aus einer Innendose besteht, wobei zu dieser Innendose eine Außendose bereitgestellt wird. Die Außendose passt formschlüssig zu der Innendose derart, dass die Außendose über die Innendose gestülpt werden kann. Außer der formschlüssigen Passform ist angegeben, dass die Außendose mittels Klebestreifen auf der Innendose befestigt werden kann. Die Außendose weist einen mehrschichtigen Aufbau (fünf Schichten) auf, bei dem eine "Mittelschicht" mit einem Materialanteil aus einem intumeszierenden Material beidseitig zunächst mit jeweils einer Schicht aus einem Glasfasermaterial beschichtet ist. Diese Schichten aus dem Glasfasermaterial sind wiederum mit einem Gummimaterial auf Basis von Polyurethan überzogen. Dieser mehrschichtige Aufbau überdeckt insbesondere auch die Öffnungen in der Installationsdose, die für die Einführung von Leerrohren oder Kabeln in die Installationsdose vorgesehen sind.

Aus der DE 10 2014 108 551 B3 ist eine Installationsdose bekannt, bei der eine innere Installationsdose mit einer separat dazu hergestellten Brandschutzhülle umgeben wird. Diese Brandschutzhülle weist eine äußere Trägerschicht auf, die die Außenfläche der Installationsdose bildet. Diese Außenfläche ist auf der Innenseite mit dem intumeszierenden Material beschichtet. Die innere Installationsdose wird mit dieser Brandschutzhülle umwickelt. Es ist beschrieben, dass dabei die Brandschutzhülle mit der inneren Installationsdose verklebt werden kann. Das Material der Trägerschicht ist als feuerfest, flexibel und im Wesentlichen unelastisch beschrieben. Die Brandschutzhülle überdeckt die Installationsdose vollflächig - d.h. auch die Öffnungen der Installationsdose zur Einführung von Kabeln und Leerrohren.

Aus der DE 20 2006 003 356 U1 ist eine Elektroinstallationsdose bekannt, die als Brandschutze ausgestaltet ist. Hierzu wird die Brandschutzdose aus einer Spritzgussmasse hergestellt, die Bestandteile eines intumeszierenden Materials enthält. Da das intumeszierende Material nur begrenzt elektrisch isolierend wirkt, ist vorgesehen, in diese Brandschutzdose eine Innendose als Formteil einzubringen aus einem elektrisch isolierenden Kunststoff.

Aus der FR 3 005 214 A ist eine Installationsdose nach dem Oberbegriff des Anspruchs bekannt, die aus elektrisch isolierendem

Kunststoff besteht. Die Dose wird in dem Bereich, indem sich Eintrittsöffnungen für Kabel oder Installationsrohre befinden, flächig mit einem weichelastischen Kunststoff überzogen. Damit werden diese Öffnungen von dem weichelastischen Kunststoff als Membranen überdeckt. Zum Einführen von Kabeln oder Leerrohren können diese Membranen durchstoßen werden. Vorteilhaft liegen diese Membranen dann abdichtend außen an den Kabeln bzw. den Leerrohren an. Auch aus der DE 20 2005 004028 Ul ist eine Installationsdose nach dem Oberbegriff des Anspruchs 1 bekannt.

Aus der DE 10 2010 007 046 A1 ist ein Elektroinstallationsteil bekannt, das als Hülse ausgestaltet ist. Diese Hülse soll ein Installationsohr umgeben, dass durch eine Bohrung in einer Wand durchgeführt werden soll. Die Hülse besteht aus intumeszierendem Material. In einem Brandfall wird damit die Bohrung in der Wand abgedichtet, so dass die Ausbreitung des Feuers sowie die Ausbreitung von Brandgasen zumindest verzögert wird. Um diese Hülse für Bohrungen unterschiedlichen Durchmesser verwenden zu können, ist vorgesehen, dass die Hülse aus einem Innenteil sowie einem Mantel besteht. Der Mantel ist so an dem Innenteil befestigt, dass dieser Mantel demontiert werden kann. Damit lässt sich die Hülse mit unterschiedlichen Materialstärken von deren Wand verwenden.

Aus der EP 2 472 685 A1 ist eine Brandschutzdose bekannt, bei der eine Außendose in bekannter Weise aus einem elektrisch isolierenden Kunststoff hergestellt ist. Es ist eine Innendose vorgesehen, die als Formteil in die Außendose einsetzbar ist. Diese Innendose besteht aus intumeszierendem Material. Die Innendose ist dabei nicht zwingend vollständig als

Dose ausgebildet, sondern kann lediglich aus der zylindrischen Fläche bestehen, die als Hülse in die Außendose eingeschoben wird.

Der vorliegenden Erfindung liegt die Ausgabe zu Grunde, die Brandschutzwirkung der bekannten Installationsdose zu verbessern.

Diese Aufgabe wird mit einer Installationsdose gemäß Anspruch 1 gelöst. Die Installationsdose weist eine Schicht aus einem elektrisch isolierenden Kunststoff auf sowie eine auf der Außenseite der Installationsdose im Bodenbereich vorgesehene Beschichtung auf aus einem intumeszierenden Material, das zumindest in Teilbereichen auf der Außenfläche dieser Dose angebracht ist, die die innere Schicht der Installationsdose bildet. Nach der Erfindung weist die Installationsdose Öffnungen für die Einführung von Kabeln und/oder Leerrohren auf. Auf der Außenfläche der inneren Schicht ist weiterhin ein weichelastisches Material angebracht, das zumindest diese Öffnungen überdeckt.

Dadurch wird vorteilhaft erreicht, dass die Installationsdose auch im montierten Zustand bei eingeführten Kabeln oder Leerrohren die Öffnung in der Beplankung abdichtend abschließt. Die Kabel oder Leerrohre werden durch das weichelastische Material hindurchgeschoben. Dabei umschließt das weichelastische Material die eingeführten Kabel bzw. Leerrohre abdichtend.

Dies erweist sich insofern als besonders vorteilhaft, als bei auftretenden Feuern die Entwicklung und Verbreitung der Rauchgase eine erhebliche Gefährdung für die Personen darstellt. Bei Feuern in Gebäuden kommen Personen in erheblichem Umfang durch diese Rauchgase zu Schaden (bis hin zu Todesfällen), auch wenn diese Personen nicht unbedingt direkt Verbrennungen durch das Feuer erleiden.

Insofern erweist sich die Abdichtung der Öffnungen - auch wenn durch diese Öffnungen Kabel bzw. Leerrohre eingeführt worden sind - durch das weichelastische Material als vorteilhaft. Durch diese Abdichtung wird verhindert, dass Rauchgase, die sich zwischen den Beplankungen der Wand in Ständerbauweise ausbreiten, durch die Installationsdosen in einen Raum hinein austreten können. Entsprechendes gilt auch für die beschriebene Situation bei der Unterputzinstallation bei dünnen Wänden.

Die besonders vorteilhafte Schutzwirkung der Installationsdose ergibt sich durch die zusammenwirkende Schutzfunktion des weichelastischen Materials und des intumeszierenden Materials.

Das weichelastische Material weist eine geringere Temperaturbeständigkeit auf als das intumeszierende Material. Die Temperaturbeständigkeit des intumeszierenden Materials betrifft dabei die Temperatur, bei der die intumeszierende Wirkung des Materials einsetzt. Unterhalb dieser Temperatur dichtet das weichelastische Material die Öffnung in der Beplankung ab. Wenn diese Temperatur erreicht bzw. überschritten ist, löst sich das weichelastische Material auf in der Weise, dass dieses Material flüssig wird und seine Form verliert. Dabei wird dann die Temperatur erreicht, bei der die intumeszierende Wirkung des intumeszierenden Materials einsetzt. Vorteilhaft wird dann die Öffnung in der Beplankung durch das intumeszierende Material verschlossen. Dies gilt ebenso für die Bohrung in der dünnen Wand, in die die Installationsdosen in Unterputz-Montage eingebaut sind. Dadurch wird der Austritt von Flammen verhindert. Dies gilt ebenso für den Austritt von Rauchgasen, der durch das intumeszierende Material ebenfalls verhindert oder zumindest erheblich reduziert wird.

Abhängig von den verwendeten Materialien kann allenfalls ein Temperaturbereich vorhanden sein, bei dem sich das weichelastische Material bereits verflüssigt hat und damit keine abdichtende Wirkung mehr entfaltet und bei dem die intumeszierende Wirkung noch nicht einsetzt. Dennoch wird auch in diesem Fall die Menge der austretenden Rauchgase reduziert. Zudem wird in der Anfangsphase der Ausbreitung des Brandes durch die dann noch bestehende Wirkung des weichelastischen Materials der Austritt der Rauchgase durch die abdichtende Wirkung verhindert. In dieser Zeit können sich Personen daher vorteilhaft noch in Sicherheit bringen, ohne dass sie durch Rauchgase geschädigt werden.

Diese unterschiedlichen Temperaturbeständigkeiten der Materialien erweisen sich bei der Herstellung der Installationsdose als vorteilhaft.

Die Installationsdose kann zunächst mit der inneren Schicht aus einem herkömmlich verwendeten Kunststoff für die Herstellung von Installationsdosen hergestellt werden.

Auf diese Installationsdose kann dann in an sich bekannter Weise das intumeszierende Material zumindest in einem Teilbereich der äußeren Fläche der Installationsdose aufgebracht werden.

Wegen der Temperatureigenschaften des weichelastischen Materials kann dieses weichelastische Material als Überzug zumindest in einem Teilbereich der Installationsdose aufgebracht werden, in dem sich die Öffnungen für die Einführung der Kabel bzw. Leerrohre befinden. Dabei liegt die Temperatur des weichelastischen Materials bei der Herstellung dieses Überzugs unter der Temperatur, bei der die intumeszierende Wirkung des intumeszierenden Materials einsetzt.

Dadurch wird die Installationsdose herstellbar mit einem gut handhabbaren Aufwand bei der Steuerung bzw. Regelung der Temperatur der Materialien bei der Herstellung der Installationsdose. Insbesondere kann die Temperatur des weichelastischen Materials bei der Herstellung der Installationsdose so gesteuert bzw. geregelt werden, dass diese Temperatur unterhalb der Temperatur liegt, bei der die intumeszierende Wirkung des intumeszierenden Materials einsetzt.

Die Dose nach Anspruch 1 hat gegenüber den bekannten Brandschutzdosen zusätzlich den Vorteil, dass die Dose winddicht und schallisolierend ist. Weiterhin werden die Kabel bzw.

Leerrohre beim Einführen in die Installationsdose durch die membranartige Wirkung des weichelastischen Materials gehalten. Diese Vorteile geltend insbesondere für die Hohlwandinstallation.

Es ist vorteilhaft, bei den Brandschutzdosen darauf zu achten, dass die äußeren Abmessungen der Dose so bleiben, dass diese dem Normmaß entspricht. Dieses Normmaß entspricht einem Außendurchmesser von 68 mm. Es erweist sich hierbei als vorteilhaft, dass bereits eine vergleichsweise dünne Schichtdicke des weichelastischen Materials ausreichend ist für die beschriebenen vorteilhaften Wirkungen des weichelastischen Materials. Dies erweist sich insofern als vorteilhaft, weil dadurch der innere Einbauraum der Installationsdose ausreichend groß bleibt, obwohl die Dose - zumindest bereichsweise - einen Aufbau aus drei Schichten aufweist.

Der Einbauraum wird dadurch ausreichend groß gehalten, wenn das intumeszierende Material im Bodenbereich der Installationsdose aufgebracht wird. Es hat sich gezeigt, dass damit die Öffnung in der Beplankung einer Hohlwand bzw. in einer Wand ausreichend abgedichtet werden kann, wenn sich das intumeszierende Material bei entsprechender Hitze ausdehnt. Die Dicke der Seitenwand der Installationsdose wird dann im Wesentlichen noch durch die Dicke der inneren Schicht aus dem üblicherweise für die Herstellung von Installationsdosen verwendeten Kunststoff bestimmt und eventuell noch von der Dicke des Überzugs aus dem weichelastischen Material.

Das weichelastische Material kann eine Schichtdicke von einem mm bis hin zu mehreren mm aufweisen und insbesondere zwischen einem mm und drei mm liegen.

Durch den beschriebenen Aufbau der Installationsdose aus drei Schichten erweist es sich als vorteilhaft, dass die Innenseite der Installationsdose aus einem elektrisch isolierenden Material besteht.

Im Bereich der Öffnungen für die Einführung der Kabel bzw. der Leerrohre bestehen die Öffnungen sowohl in der inneren Schicht sowie auch in der intumeszierenden Schicht. Diese Öffnungen werden somit nur von dem weichelastischen Material überdeckt.

Es erweist sich bei der Befestigung von elektrischen bzw. elektronischen Elementen bei der Unterputz-Montage im Zusammenhang mit der vorliegenden Erfindung als vorteilhaft, die Befestigung der Elemente nicht mittels der Spreizkrallen vorzunehmen sondern diese Elemente mittels der Befestigungsschrauben am Außenumfang der Dose zu befestigen. Diese Befestigung ist im Rahmen der vorliegenden Erfindung besonders bevorzugt, weil dabei vermieden wird, dass die Spreizkrallen sich durch die Installationsdose drücken und damit die geschlossene Oberfläche der Installationsdose zerstört wird. Durch diesen Bereich der Installationsdose könnten bei einem Brand wiederum Rauchgase hindurchtreten.

Anspruch 1 betrifft in eine Installationsdose für die Elektroinstallation, die als eine innere Schicht eine Dose aufweist, die aus einem elektrisch isolierenden Kunststoff besteht. Die Installationsdose weist weiterhin eine Beschichtung aus einem intumeszierenden Material auf, das in Teilbereichen auf der Außenfläche der Dose angebracht ist, die die innere Schicht der Installationsdose bildet. Erfindungsgemäß ist vorgesehen, dass die Installationsdose Öffnungen für die Einführung von Kabeln und/oder Leerrohren aufweist und dass auf der Außenfläche der Dose, die die innere Schicht der Installationsdose bildet, im Bereich, der sich um die Öffnungen erstreckt, ein weichelastisches Material angebracht ist, das zumindest diese Öffnungen überdeckt. Weiterhin ist dabei das intumeszierende Material in Teilbereichen auf der Außenfläche der Dose aufgebracht, die die innere Schicht der Installationsdose bildet. Diese Teilbereiche überdecken sich nicht mit den Öffnungen, die von dem weichelastischen Material überdeckt sind, so dass diese Öffnungen nur von dem weichelastischen Material überdeckt sind.

Diese Ausgestaltung erweist sich insofern als vorteilhaft, weil damit vermieden wird, dass die Installationsdose aus drei Schichten aufgebaut ist. Dennoch bleiben die vorteilhaften Wirkungen erhalten, die eingangs beschrieben worden sind.

Es wird auch verhindert, dass die Zirkulation von Rauchgasen bei beginnenden und sich entwickelnden Bränden durch die Öffnungen in Beplankungen von Wänden in Ständerbauweise oder auch durch Wände, in die die Installationsdosen in Unterputz-Montage eingebracht sind, in Räume hinein erfolgen kann. Dies wird durch das weichelastische Material erreicht, das die Öffnungen überdeckt, die vorhanden sind für die Einführung von Kabeln und / oder Leerrohren. Dies gilt zumindest so lange, bis das weichelastische Material in Folge der Erwärmung die abdichtende Wirkung verliert.

Ebenso wirkt das weichelastische Material in seiner Schutzwirkung bei Bränden mit dem intumeszierenden Material derart zusammen, dass die Öffnung anfangs durch die angedichtete Installationsdose durch das weichelastische Materials und bei größerer Hitze - und damit fehlender abdichtender Wirkung durch das weichelastische Material - durch das sich ausdehnende intumeszierende Material ersetzt wird.

Da bei der Installationsdose kein dreischichtiger Aufbau der Installationsdose benötigt wird, ist dabei der Einbauraum im Doseninneren größer. Dies gilt insbesondere auch, wenn das äußere Maß der Installationsdose innerhalb des Normmaßes bleibt.

Es ist vorteilhaft, wenn das intumeszierende Material nur im Bodenbereich der Installationsdose auf der Außenseite der inneren Schicht aufgebracht wird.

Bei der Installationsdose besteht durch die weichelastische Schicht eine schall- und wärmeisolierende Wirkung durch die Vermeidung von Zugluft. Dies gilt wiederum insbesondere bei einer Ausführungsform der Installationsdose als Unterputz-Dose.

Wegen des Verhaltens des weichelastischen Materials und des intumeszierenden Materials bei den Temperaturen erweist es sich als vorteilhaft, zunächst die Installationsdose mit der inneren Schicht herzustellen, anschließend das intumeszierende Material aufzubringen und daran anschließend die Öffnungen mit dem weichelastischen Material zu verschließen.

Bei der Ausgestaltung der Installationsdose nach Anspruch 2 weist die Installationsdose in dem Bereich, in dem die Installationsdose bei einer Hohlwandinstallation an der Beplankung der Wand anliegt bzw. an der Raumseite der Wand, in die die Installationsdose in Unterputz-Montage montiert wird, und / oder in dem Bereich, in dem die Installationsdose durch eine Öffnung in der Beplankung hindurchgeführt ist bzw. in dem Bereich der Außenumfangs der Installationsdose, der bei einer Unterputz-Montage an der zylinderförmigen Wand im vorderen Bereich des Bohrloches anliegt, eine Abdichtung aus weichelastischem Material auf.

Dadurch wird vorteilhaft erreicht, dass die abdichtende Wirkung des weichelastischen Materials zu Beginn eines sich entwickelnden Brandes nicht nur die Dose als solche abdichtet, sondern weiterhin auch den Bereich zwischen der Installationsdose und der Wand. Damit wird vermieden, dass die Rauchgase zwischen der Installationsdose und dem Randbereich der Öffnung zum Einbau der Installationsdose in der Beplankung bzw. in der Wand austreten können.

Wenn sich das weichelastische Material in Folge der Wärmeentwicklung so verformt bzw. verflüssigt, dass dieses seine abdichtende Wirkung verliert, setzt auch die Wirkung des intumeszierenden Materials ein derart, dass dieses intumeszierende Material die Öffnung in der Beplankung verschließt.

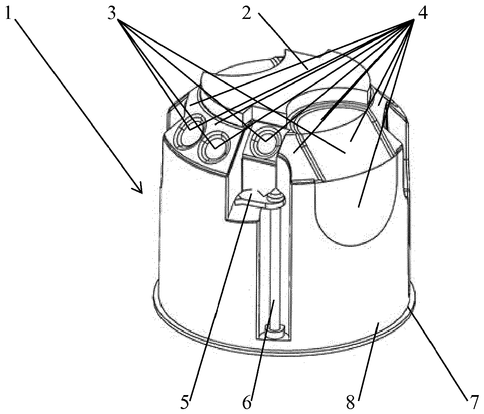

Ein Ausführungsbeispiel der Erfindung ist in der Zeichnung dargestellt. Die einzige Figur zeigt eine Installationsdose 1 für die Hohlwandinstallation.

Es ist zu sehen, dass diese Installationsdose 1 auf ihrer Außenseite im Bodenbereich eine Schicht 2 aus einem intumeszierenden Material aufweist. Diese Schicht 2 weist dabei eine solche äußere Form auf, dass die Öffnungen 3 für die Einführung von Kabeln und / oder Leerrohren in die Installationsdose 1 nicht von der Schicht 2 aus dem intumeszierenden Material überdeckt werden.

In dem dargestellten Ausführungsbeispiel ist zu sehen, dass der Bereich, der sich um die Öffnungen 3 erstreckt, insgesamt von einem weichelastischen Material 4 überzogen ist. Dieses weichelastische Material 4 verschließt somit die Öffnungen 3. Allerdings kann dieses weichelastische Material 4 beim Einführen von Kabeln bzw. Leerrohren in die Installationsdose 1 einfach von den Kabeln bzw. den Leerrohren durchstoßen werden. Das weichelastische Material 4 liegt dann abdichtend an den eingeführten Kabeln bzw. Leerrohren an.

Somit weist in dem dargestellten Ausführungsbeispiel die Schicht 2 des intumeszierenden Materials keine Überdeckung auf mit dem Bereich, in dem das weichelastische Material 4 auf der Außenseite der Installationsdose aufgebracht ist.

Es ist weiterhin eine der Spannbratzen 5 mit der zugehörigen Spannschraube 6 zu sehen.

Alternativ zur Darstellung der Figur ist es auch möglich, dass das weichelastische Material 4 nicht nur den Bereich um die Öffnungen 3 überdeckt sondern weiterhin auch noch die Schicht 2 überdeckt. In diesem Fall ist die Schicht 2 zwischen der inneren Schicht der Installationsdose und dem weichelastischen Material 4 eingeschlossen.

Ebenso kann im Bereich der Fläche der Schulter 7, mit der die eingesetzte Installationsdose 1 an der Sichtseite der Beplankung anliegt, und / oder des Kragens 8, der bei eingesetzter Installationsdose an der Innenseite der Öffnung in der Beplankung anliegt, noch eine Abdichtung aus weichelastischem Material aufweisen.

## Patentansprüche

1. Installationsdose (1) für die Elektroinstallation, wobei die Dose eine innere Schicht aus einem elektrisch isolierenden Kunststoff aufweist, wobei die Installationsdose (1) Öffnungen (3) für die Einführung von Kabeln und/oder Leerrohren aufweist und wobei auf der Außenfläche der inneren Schicht im Bereich, der sich um die Öffnungen (3) erstreckt, ein weichelastisches Material (4) angebracht ist, das diese Öffnungen (3) überdeckt, **dadurch gekennzeichnet, dass** die Installationsdose eine auf der Außenseite der Installationsdose im Bodenbereich vorgesehene Beschichtung (2) aus einem intumeszierenden Material aufweist, das in Teilbereichen auf der Außenfläche der inneren Schicht angebracht ist J und dass das intumeszierende Material in den Teilbereichen (2) auf der Außenfläche der inneren Schicht aufgebracht ist, die sich nicht mit den Öffnungen (3) überdecken, die von dem weichelastischen Material (4) überdeckt sind, so dass diese Öffnungen (3) nur von dem weichelastischen Material (4) überdeckt sind.

2. Installationsdose nach Anspruch 1,
**dadurch gekennzeichnet, dass** die Installationsdose (1) in dem Bereich (7), in dem die Installationsdose bei einer Hohlwandinstallation an der Beplankung der Wand anliegt bzw. an der Raumseite der Wand, in die die Installationsdose in Unterputz-Montage montiert wird, und / oder in dem Bereich (8), in dem die Installationsdose durch eine Öffnung in der Beplankung hindurchgeführt ist bzw. in dem Bereich des Außenumfangs der Installationsdose, der bei einer Unterputz-Montage an der zylinderförmigen Wand im vorderen Bereich des Bohrloches anliegt, eine Abdichtung aus weichelastischem Material aufweist.

## Claims

1. An installation box (1) for electrical installation, the box comprising an inner layer made of an electrically insulating plastic, the installation box (1) comprising openings (3) for the insertion of cables and/or empty conduits, and a flexible material (4) being applied to the outer surface of the inner layer in the region that extends around the openings (3), the material covering said openings (3), **characterized in that** the installation box comprises a coating (2) provided on the outside of the installation box in the floor region and made of an intumescent material, the material being applied in sections to the outer surface of the inner layer and that the intumescent material is applied in the sections (2) on the outer surface of the inner layer which do not overlap with the openings (3) which are covered by the flexible material (4), so that said openings (3) are covered only by the flexible material (4).

2. The installation box according to claim 1, **characterized in that** the installation box (1) comprises a seal made of a flexible material in the region (7) in which the installation box rests against the paneling of the wall in a cavity wall installation or on the room side of the wall in which the installation box is flush-mounted, and/or in the region (8) in which the installation box is passed through an opening in the paneling or in the region of the outer circumference of the installation box that rests against the cylindrical wall in the front region of the drill hole in a flush-mounted installation.

## Revendications

1. Boîtier d'installation (1) pour installation électrique, dans lequel le boîtier présente une couche interne en matière plastique électriquement isolante, dans lequel le boîtier d'installation (l) présente des ouvertures (3) pour l'introduction de câbles et/ou conduites et dans lequel sur la surface extérieure de la couche intérieure un matériau élastique souple (4) est appliqué dans la zone, qui s'étend autour des ouvertures (3), qui recouvre ces ouvertures (3), **caractérisé en ce que** la boîte d'installation présente un revêtement (2) prévu sur un côté extérieur du boîtier d'installation dans la zone de sol constitué d'un matériau intumescent, qui est appliqué sur des zones partielles sur la surface extérieure de la couche intérieure et **en ce que** le matériau intumescent est appliqué sur la surface extérieure de la couche intérieure dans les zones partielles (2), qui ne recouvrent pas les ouvertures (3), qui sont recouvertes par le matériau souple (4), de sorte que ces ouvertures (3) seules soient recouvertes par le matériau élastique souple (4).

2. Boîtier d'installation selon la revendication 1, **caractérisé en ce que** le boîtier d'installation (1) est monté dans la zone (7) dans laquelle le boîtier d'installation repose contre le bordage du mur dans une installation de mur creux ou du côté pièce du mur, dans lequel le boîtier d'installation est monté en montage encastré, et/ou dans la zone (8), dans laquelle le boîtier d'installation est passé à travers une ouverture dans le bordage ou présente dans la zone de la circonférence extérieure du boîtier d'installation, qui est encastrée sur la paroi cylindrique dans la zone avant du trou de perçage, un joint en matériau élastique souple.
